# EUROPÄISCHE PATENTSCHRIFT

(11) **EP 3 078 628 B1**
(45) Veröffentlichungstag und Bekanntmachung des Hinweises auf die Patenterteilung: **24.01.2018**
(21) Anmeldenummer: 16164360.6
(22) Anmeldetag: 08.04.2016
(51) Int. Cl.: B67C 3/28, F16K 1/14, F16K 31/08, F16K 27/02

(54) **VORRICHTUNG ZUM VARIIEREN DES VOLUMENSTROMS EINES FÜLLPRODUKTS IN EINER ABFÜLLANLAGE**
DEVICE FOR VARYING THE VOLUME FLOW OF A FILLING PRODUCT IN A FILLING SYSTEM
DISPOSITIF DE VARIATION DU DEBIT D'UN PRODUIT DE REMPLISSAGE DANS UN DISPOSITIF D'EMBOUTEILLAGE

(30) Priorität: 09.04.2015 DE 102015105352
(43) Veröffentlichungstag der Anmeldung: 12.10.2016
(73) Patentinhaber: KRONES AG, 93073 Neutraubling (DE)
(72) Erfinder: BAUMGARTNER, Sebastian, 93073 Neutraubling (DE)
(74) Vertreter: Nordmeyer, Philipp Werner

(56) Entgegenhaltungen:
- EP-A1- 2 439 169
- WO-A2-2010/112143
- US-A1- 2008 185 542

## Beschreibung

### Technisches Gebiet

Die vorliegende Erfindung betrifft eine Vorrichtung zum Variieren des Volumenstroms eines Füllprodukts in einer Abfüllanlage, insbesondere in einer Getränkeabfüllanlage.

### Stand der Technik

Im Bereich von Getränkeabfüllanlagen ist es bekannt, Füllprodukte in zu befüllende Behälter abzufüllen, wobei während des eigentlichen Füllvorganges der Volumenstrom des Füllproduktes zwischen zwei unterschiedlichen Volumenströmen hin und her geschaltet werden kann. Dabei ist es beispielsweise von Vorteil, zu Beginn des Abfüllvorganges zunächst mit einem reduzierten Volumenstrom abzufüllen, dann im Hauptteil des Abfüllvorganges mit einem hohen Volumenstrom zu füllen und dann zum Ende des Abfüllvorganges hin wieder mit einem reduzierten Volumenstrom zu füllen. Die Verwendung eines reduzierten Volumenstroms zu Beginn des Abfüllvorganges stellt sicher, dass das Füllprodukt in dem zu befüllenden Behälter nicht übermäßig aufschäumt, da die Fallhöhe des Füllprodukts in den dann noch unbefüllten Behälter und damit die Aufschäumneigung zu Beginn des Füllvorganges am größten ist. Während des Hauptteils des Füllvorganges kann durch das Füllen mit einem hohen Volumenstrom eine schnelle Befüllung unterstützt werden. Zum Ende des Füllvorganges hin wird der Volumenstrom wieder reduziert, um ein definiertes Abschalten des Füllproduktstromes beim Vorliegen eines vorgegebenen Abschaltkriteriums, beispielsweise einem vorgegebenen Füllvolumen, einer vorgegebenen Füllhöhe oder einem vorgegebenen Füllgewicht, zu unterstützen. Weiterhin wird zum Ende des Füllvorganges hin üblicherweise ein Halsbereich des zu befüllenden Behälters, beispielsweise einer zu befüllenden Flasche, erreicht, in welchem der Querschnitt des zu befüllenden Behälters reduziert ist und entsprechend der Füllproduktspiegel im Behälter zum Ende des Füllvorganges hin bei gleichbleibendem Volumenstrom sehr schnell ansteigen würde. Durch ein Reduzieren des Volumenstroms zum Ende des Füllvorgangs hin kann entsprechend ein Anpassen der Geschwindigkeit des Ansteigens des Füllproduktspiegels im Halsbereich des dann fast vollständig befüllten Behälters erreicht werden, um das Ende des Füllvorgangs zuverlässig und ohne Überschießen des Füllprodukts erreichen zu können.

Um zwischen zwei unterschiedlichen Volumenströmen in einem Füllorgan einer Abfüllanlage hin und her zu schalten ist es bekannt, die Stellung des Füllventils zu variieren, wobei das Füllventil gleichzeitig auch eine Schließfunktion zum Beenden und Starten des Füllproduktstroms übernimmt. Weiterhin ist es bekannt, den Volumenstrom des Füllprodukts mittels Produktdrosseln zwischen zwei unterschiedlichen Volumenströmen hin und her zu schalten. Die Produktdrosseln sind dabei üblicherweise in Form eines Balgs vorgesehen, welcher den Fließquerschnitt in einem produktführenden Weg reduziert oder erweitert.

Eine proportionale Regelung des Volumenstroms ist ebenfalls bekannt, beispielsweise aus der DE 10 2012 211 926 A1, in welcher mittels eines Regelventils ein Einstellen des Volumenstroms ermöglicht wird. In diesem Regelventil wird mittels einer Anordnung von Faltenbälgen ein hygienisches Design geschaffen.

Die WO 2010/112143 A2 beschreibt ein Füllelement zum Füllen von Behältern mit einem flüssigen Füllgut mit einer Vorrichtung gemäß dem Oberbegriff des Anspruchs 1, eine Füllmaschine sowie ein Verfahren zum Füllen von Behältern. Die EP 2 439 169 A1 beschreibt eine Vorrichtung zum Fördern von Flüssigkeiten. Die US 2008/0185542 A1 beschreibt ein Kugelsitzventil mit sich trichterförmig erweiterndem Ventilsitzkörper.

### Darstellung der Erfindung

Ausgehend von dem bekannten Stand der Technik ist es eine Aufgabe der vorliegenden Erfindung, eine weiter verbesserte Vorrichtung zum Variieren des Volumenstroms eines Füllprodukts in einer Abfüllanlage anzugeben.

Diese Aufgabe wird mit einer Vorrichtung zum Variieren des Volumenstroms eines Füllprodukts in einer Abfüllanlage mit den Merkmalen des Anspruchs 1 gelöst. Vorteilhafte Weiterbildungen ergeben sich aus den Unteransprüchen.

Entsprechend wird eine Vorrichtung zum Variieren des Durchflusses eines Füllprodukts in einer Abfüllanlage, umfassend eine mit einem Zulauf und einem Auslauf verbundene Steuerkammer und ein in der Steuerkammer aufgenommenes Steuerelement, welches durch Wechselwirkung mit einem außerhalb der Steuerkammer angeordneten Antrieb in der Steuerkammer verschiebbar ist vorgeschlagen. Erfindungsgemäß variiert der Querschnitt der Steuerkammer zwischen einem dem Zulauf zugewendeten Ende der Steuerkammer und einem dem Auslauf zugewendeten Ende der Steuerkammer stufenlos.

Dadurch, dass der Querschnitt der Steuerkammer zwischen einem dem Füllproduktzulauf zugewandten Ende und einem dem Füllproduktauslauf zugewendeten Ende stufenlos variiert, kann entsprechend eine Vorrichtung zum Variieren des Durchflusses angegeben werden, welche eine stufenlose Verstellung des Durchflusses ermöglicht. So kann der Verlauf des Füllvorgangs in einer Abfüllanlage an die jeweiligen Eigenschaften des Füllprodukts sowie an die jeweiligen Behältergeometrien vorteilhaft angepasst werden. Dadurch, dass es möglich ist, den Durchfluss während des Füllvorgangs stufenlos zu variieren, kann entsprechend ein weiter verbessertes Abfüllergebnis erreicht werden. Gleichzeitig ist es möglich, durch das in der Steuerkammer aufgenommene Steuerelement ein besonders hygienisches Design zu erreichen, bei welchem auf die Verwendung von Faltenbälgen zur Abdichtung verzichtet werden kann.

Um eine besonders einfache Ansteuerung des Steuerelements zu ermöglichen und entsprechend eine stufenlose, proportionale Einstellung des effektiven Fließquerschnitts zu ermöglichen, ist der Querschnitt der Steuerkammer bevorzugt so ausgebildet, dass er sich zwischen dem dem Zulauf zugewendeten Ende und dem dem Auslauf zugewendeten Ende gemäß einer vorgegebenen mathematischen Funktion ändert. Damit kann über eine entsprechende Ansteuerung des Steuerelements eine über die vorgegebene mathematische Funktion einfach zu berechnende Änderung des Durchflussquerschnitts und damit des Durchflusses erhalten werden. Damit ist die Ansteuerung des Antriebs beziehungsweise des Steuerelements besonders einfach und es lässt sich der für die jeweilige Abfüllsituation gewünschte Durchfluss einfach einstellen.

Bei der Steuerkammer kann es sich um eine solche mit einem kreisförmigen Querschnitt handeln, dessen Radius sich beispielsweise von dem dem Zulauf zugewendeten Ende zu dem dem Auslauf zugewendeten Ende hin linear ändert. So kann über die Berechnung der Kreisfläche der Steuerkammer (A=π*r²) und die Subtraktion des effektiven Querschnitts des Steuerelemente auf einfache Weise der effektive Fließquerschnitt berechnet werden. Dieser effektive Fließquerschnitt lässt sich dabei an jeder beliebigen Position des Steuerelements zwischen dem dem Zulauf zugewendeten Ende und dem dem Auslauf zugewendeten Ende der Steuerkammer berechnen. Damit kann durch eine entsprechende Positionierung des Steuerelements innerhalb der Steuerkammer der effektive Fließquerschnitt direkt eingestellt werden.

Eine stufenlose Einstellung der möglichen Durchflüsse ergibt sich auch, wenn sich der Querschnitt der Steuerkammer bevorzugt zwischen dem dem Zulauf zugewendeten Ende und dem Auslauf zugewendeten Ende stetig ändert.

In einer besonders bevorzugten Variante ist die Steuerkammer im Wesentlichen konusförmig ausgebildet, so dass sowohl eine einfache Herstellung der Steuerkammer - beispielsweise durch konusfräsen - ermöglicht wird, als auch ein einfacher mathematischer Zusammenhang zwischen der Position des Steuerelements in der Steuerkammer und dem sich jeweils daraus ergebenden effektiven Fließquerschnitt hergestellt werden kann. Damit wird die Ansteuerung der Vorrichtung erleichtert und es können für den jeweiligen Behälter sowie den jeweiligen Füllzustand des Behälters optimierte Füllbedingungen auf einfache Weise eingestellt werden.

Das Steuerelement lässt sich in der Steuerkammer bevorzugt zwischen einer Position mit geringem Querschnitt und einer Position mit großem Querschnitt hin- und her bewegen, bevorzugt linear hin- und her bewegen, so dass eine stufenlose Einstellung des effektiv resultierenden Fließquerschnitts zwischen den beiden Extrempositionen gegeben ist.

Erfindungsgemäß ist der Antrieb so ausgebildet, dass er das Steuerelement nur zwischen der Position mit dem kleinstmöglichen Querschnitt und der Position mit dem größtmöglichen Querschnitt hin und her bewegen kann - nicht aber darüber hinaus. Damit ist es für den Antrieb und das Steuerelement nicht möglich, die Vorrichtung und damit den Durchfluss vollständig zu verschließen. Die Vorrichtung fungiert entsprechend nicht wie ein Ventil, welches mit einem Ventilsitz versehen ist und entsprechend einen vollständigen Verschluss des jeweiligen Strömungsweges ermöglicht, sondern die Vorrichtung stellt stets einen Mindestdurchfluss bereit, wenn sich das Steuerelement in der Position mit geringem Querschnitt befindet. Ein Ventilsitz ist entsprechend nicht vorgesehen. Das Steuerelement kann entsprechend auch nicht abdichtend in einem Ventilsitz aufgenommen werden.

Um sicher zu stellen, dass das Steuerelement die Steuerkammer nicht verschließen kann, weist der Antrieb bevorzugt einen Anschlag zur Begrenzung der Bewegung des Antriebs bzw. des Steuerelementes zwischen der ersten Endposition und der zweiten Endposition auf, wobei der Anschlag besonders bevorzugt mechanisch ausgeführt ist.

Das Steuerelement ist bevorzugt sphärisch ausgebildet, besonders bevorzugt kugelförmig. So kann ein gutes hygienisches Design bereitgestellt werden, da die Oberflächen einfach gereinigt werden können.

Weiterhin ist das Steuerelement bevorzugt vollständig in der Steuerkammer aufgenommen. Entsprechend liegt das Steuerelement auch vollständig im Produktstrom, so dass es von allen Seiten im Wesentlichen von dem jeweiligen Füllprodukt umströmt beziehungsweise zumindest benetzt wird. Eine vollständige Umströmung beziehungsweise vollständige Benetzung liegt auch dann vor, wenn das Steuerelement bei einem Punktkontakt oder Linienkontakt mit der Innenwand der Steuerkammer in Kontakt steht und das Füllprodukt an der Position des Punktkontakts beziehungsweise Linienkontakts im Wesentlichen verdrängt wird.

Das Steuerelement liegt bevorzugt in der Steuerkammer im Wesentlichen ungeführt vor, so dass das Steuerelement beim etwaigen Wegfall des außerhalb der Steuerkammer angeordneten Antriebs frei in der Steuerkammer ohne Führung beweglich wäre und im Prinzip jegliche Position einnehmen könnte.

Dadurch, dass das Steuerelement bevorzugt vollständig in der Steuerkammer aufgenommen ist und sich innerhalb der Steuerkammer zwischen der Position mit geringem effektiven Fließquerschnitt und der Position mit großem effektiven Fließquerschnitt hin und her bewegt, wobei es vollständig von dem Füllprodukt umgeben, umströmt beziehungsweise benetzt ist, ergeben sich bei Schaltvorgängen von einem ersten effektiven Fließquerschnitt zu einem zweiten effektiven Fließquerschnitt keine Druckspitzen, so wie sie beispielsweise bei den aus dem Stand der Technik bekannten Ausbildungen mit einem stufenweise ausgebildeten Querschnitt einer Steuerkammer beziehungsweise der Ausbildung als in einen Ventilsitz einfahrenden Regelventils auftreten. Entsprechend kann die Variation des Durchflusses des Füllproduktes sowohl proportional, als auch stufenlos, als auch druckspitzenfrei durchgeführt werden, so dass ein sehr sanftes Regulieren des Füllproduktflusses während des Abfüllvorgangs ermöglicht ist, wodurch das Abfüllergebnis weiter verbessert werden kann.

Die Anbindung zwischen dem Steuerelement und dem Antrieb ist besonders bevorzugt magnetisch ausgeführt. Entsprechend ist das Steuerelement beispielsweise aus einem magnetisierbaren oder magnetischen Material ausgebildet, beispielsweise einem magnetischen nichtrostenden Stahl oder Edelstahl, und der Antrieb wirkt auf das Steuerelement entsprechend dadurch, dass außerhalb der Steuerkammer entsprechende Magnete beziehungsweise Gegenmagnete angeordnet sind, über welche das in der Steuerkammer aufgenommene Steuerelement mittels des Antriebs verschoben werden kann.

In diesem Zusammenhang ist zu bemerken, dass die vollständige Aufnahme des Steuerelements in der Steuerkammer derart, dass das Steuerelement stets vollständig von dem Füllprodukt umgeben ist, dazu führt, dass die zur Verschiebung des Steuerelements notwendigen Kräfte, welche von dem Antrieb auf das Steuerelement übertragen werden müssen, unabhängig von dem Druck des jeweiligen Füllprodukts sind. Insbesondere können auf diese Weise auch unter einem höheren Druck vorliegende karbonisierte Füllprodukte in eine Getränkeabfüllanlage problemlos abgefüllt werden, wodurch die Vorrichtung den Durchfluss der karbonisierten Füllprodukte variieren kann, da das in der Steuerkammer vollständig aufgenommene Steuerelement durch das Füllprodukt von allen Seiten mit dem gleichen Druck beaufschlagt wird. Damit heben sich die Kräfte, welche durch das unter Druck stehende Produkt auf das Steuerelement ausgeübt werden, auf, so dass das Steuerelement unabhängig von dem jeweiligen Füllproduktdruck über einen entsprechend moderat dimensionierten Antrieb verschoben werden kann.

Die Wände der Steuerkammer sowie die Oberfläche des Steuerelements sind besonders gut reinigbar, da hier auf die Verwendung beispielsweise von Faltenbälgen verzichtet werden kann und die jeweiligen Oberflächen als vollständig glatte und stetige Oberflächen ausgebildet werden können, ohne Hinterschnitte und ohne Strukturen, welche der Reinigung schwierig zugänglich sind.

Durch eine bevorzugte Wechselwirkung des Antriebs und des Steuerelements auf berührungslose Weise kann die hygienische Situation noch weiter verbessert werden.

Entsprechend stellt die vorgeschlagene Vorrichtung zum Variieren des Durchflusses eine ökonomisch herstellbare Anordnung bereit, welche wenige Verschleißteile aufweist und welche ein gutes hygienisches Design ermöglicht.

Die Kopplung zwischen dem Antrieb und dem Steuerelement kann so ausgebildet sein, dass ein zuverlässiges Verschieben des Steuerelements innerhalb der Steuerkammer ermöglicht wird. Die Kopplung zwischen dem Antrieb und dem Steuerelement, beispielsweise über eine entsprechende magnetische Wechselwirkung, muss jedoch nicht übermäßig stark ausgebildet sein, da das Steuerelement stets in dem zu steuernden Füllprodukt liegt und entsprechend die Druckverhältnisse auf das Steuerelement von allen Seiten im Wesentlichen gleich sind. Diese Ausbildung unterscheidet sich von den aus dem Stand der Technik bekannten Ausbildungen, in welchen das Steuerelement gleichzeitig auch als Schließventil verwendet wird, bei welchem dann auf der dem Füllproduktzulauf zugewendeten Seite des Steuerelements ein wesentlich höherer Druck vorliegt, als der dem Füllproduktauslauf zugewandten Seite des Steuerelements, wenn das Steuerelement in dem Ventilsitz aufgenommen ist und entsprechend eine vollständige Abdichtung bereitstellt. In diesem Fall muss die Kopplung zwischen dem Steuerelement und dem Antrieb hohe Kräfte übertragen, welche es ermöglichen, das Steuerelement entgegen den herrschenden Druckverhältnissen aus dem Ventilsitz wieder herauszuheben. Hierauf kann bei der vorgeschlagenen Vorrichtung zum Variieren des Durchflusses, so wie sie oben beschrieben ist, verzichtet werden, da das Steuerelement nicht zum Verschließen der Vorrichtung vorgesehen ist.

Bevorzugt sind auch Mittel zum Verhindern eines vollständigen Verschlusses der Steuerkammer durch das Steuerelement in der Steuerkammer vorgesehen, bevorzugt im Bereich des Auslaufs vorliegende Stege, Rippen, Abweiser, Ablenkbügel, Abstandshalter und/oder Anschläge. Auf diese Weise kann verhindert werden, dass das Steuerelement den Füllproduktablauf oder den Füllproduktzulauf vollständig verschließt. Vielmehr ist vorgesehen, dass die Steuerkammer und das Steuerelement so ausgebildet sind, dass stets ein vorgegebener Mindestdurchfluss erreicht wird und das Steuerelement stets vollständig von dem Füllprodukt umgeben beziehungsweise von diesem benetzt ist.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Schnittdarstellung durch eine Vorrichtung zum Variieren des Durchflusses eines Füllprodukts in einer Abfüllanlage in einem ersten Schaltzustand, und
- Figur 2: die Vorrichtung aus Figur 1 in einem zweiten Schaltzustand.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird verzichtet, um Redundanzen zu vermeiden.

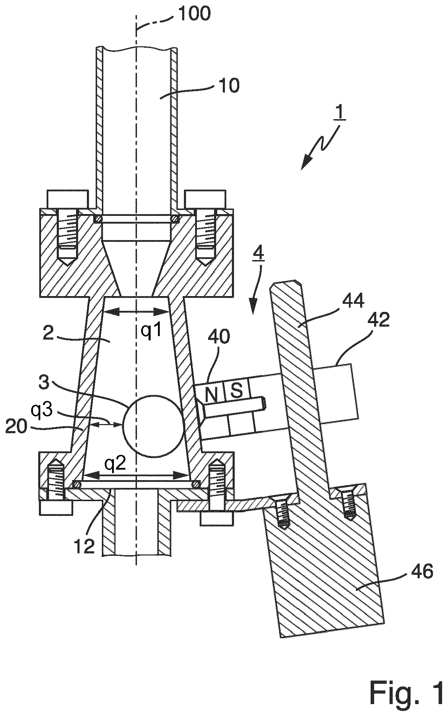

In Figur 1 ist eine Vorrichtung 1 zum Variieren des Volumenstroms eines Füllprodukts in einer Abfüllanlage gezeigt. Die Vorrichtung 1 ist beispielsweise zwischen einem hier nicht gezeigten Füllproduktkessel, welcher über einen Zulauf 10 mit der Vorrichtung 1 verbunden ist, und einem Auslauf 12, über welchen das Füllprodukt aus der Vorrichtung 1 ausläuft und beispielsweise einer Ausgabeöffnung oder einem Steuerventil zum Steuern des Füllproduktstroms in einen zu befüllenden Behälter zugeführt wird, angeordnet.

Die Vorrichtung 1 umfasst eine Steuerkammer 2, die zwischen dem Zulauf 10 und dem Auslauf 12 angeordnet ist. Die Steuerkammer 2 wird von dem über den Zulauf 10 zugeführten Füllprodukt durchströmt, wobei das Füllprodukt die Steuerkammer 2 dann über den Auslauf 12 wieder verlässt.

In der Steuerkammer 2 ist ein Steuerelement 3 aufgenommen, welches mit einem außerhalb der Steuerkammer 2 angeordneten Antrieb 4 in Wechselwirkung steht. Mittels des außerhalb der Steuerkammer 2 angeordneten Antriebs 4 ist das Steuerelement 3 innerhalb der Steuerkammer 2 positionierbar und insbesondere auch verschiebbar.

Der Querschnitt der Steuerkammer 2 variiert stufenlos zwischen einem dem Zulauf 10 zugewendeten Ende der Steuerkammer 2 und einem dem Auslauf 12 zugewendeten Ende der Steuerkammer 2. In dem gezeigten Ausführungsbeispiel hat die Steuerkammer 2 an ihrem dem Zulauf 10 zugewendeten Ende einen ersten Querschnitt q1 und an ihrem dem Auslauf 12 zugewendeten Ende der Steuerkammer 2 einen weiteren Querschnitt q2. Der Querschnitt q1 ist in dem gezeigten Ausführungsbeispiel kleiner als der Querschnitt q2. In einem anderen Ausführungsbeispiel kann aber auch an dem dem Zulauf 10 zugewendeten Ende der Steuerkammer 2 der größere Querschnitt und an dem, dem Auslauf 12 zugewendeten Ende der Steuerkammer 2 der kleinere Querschnitt vorgesehen sein. In dem gezeigten Ausführungsbeispiel ist jedoch q1 kleiner als q2.

Die Steuerkammer 2 hat in dem gezeigten Ausführungsbeispiel eine konusförmige Ausprägung, welche sich in der Schnittdarstellung der Figur 1 durch den trapezförmigen Querschnitt zeigt. Der Querschnitt ist hier rotationssymmetrisch zur Achse 100 der Vorrichtung 1 zu verstehen.

Jegliche andere Ausformung des Querschnitts der Steuerkammer 2 beziehungsweise des Verlaufs des Querschnitts jeweils senkrecht zur Achse 100 der Vorrichtung 1 ist jedoch auch denkbar, solange der Querschnitt zwischen dem dem Zulauf 10 zugewendeten Ende der Steuerkammer 2 und dem dem Auslauf 12 zugewendeten Ende der Steuerkammer 2 variiert und in zumindest einer Position größer ist, als in einer anderen Position. Die Querschnitte können auch nichtrotationssymmetrisch zur Achse 100 der Vorrichtung 1 ausgestaltet sein.

Der Verlauf der Querschnitte der Steuerkammer 2 zwischen dem dem Zulauf 10 zugewendeten Ende und dem dem Auslauf 12 zugewendeten Ende der Steuerkammer 2 können auch einem anderen Muster folgen und beispielsweise im mittleren Bereich der Steuerkammer 2 gegenüber den äußeren Bereichen eingeschnürt oder ausgebeult sein.

Zwischen ihrem dem Zulauf 10 gewendeten Ende und ihrem dem Auslauf 12 zugewendeten Ende der Steuerkammer 2 erstrecken sich die Innenwände 20 der Steuerkammer 2 in dem gezeigten Ausführungsbeispiel linear. Entsprechend ergibt sich eine stufenlose und einer vorgegebenen mathematischen Funktion folgenden Variation des Querschnitts der Steuerkammer 2 zwischen dem dem Zulauf 10 zugewendeten Ende und dem dem Auslauf 12 zugewendeten Ende. Dabei ändert sich der Radius der Steuerkammer 2 linear, sodass sich der Querschnitt der Steuerkammer bei einem vorgegebenen Radius r zu A=π*r² berechnen lässt. Entsprechend besteht hier ein quadratischer Zusammenhang zwischen dem sich linear ändernden Radius r und dem Querschnitt der Steuerkammer.

Die stufenlose Ausprägung der Querschnitte in der Steuerkammer 2 ermöglicht eine stufenlose Variation des effektiven Querschnitts und damit auch eine stufenlose Variation des Durchflusses des Füllprodukts durch die Vorrichtung 1.

Das Steuerelement 3 ist in dem gezeigten Ausführungsbeispiel kugelförmig ausgebildet und ist hier als magnetische Stahlkugel ausgebildet. Die Oberfläche des Steuerelements 3 ist glatt, so dass das Steuerelement 3 einfach reinigbar ist. Auch die Innenwände 20 der Steuerkammer 2 sind glatt, so dass auch hier eine einfache Reinigung mit herkömmlichen Methoden ermöglicht ist, und entsprechend ein hygienisches Design bereitgestellt werden kann.

In anderen Ausgestaltungen des Steuerelements 3 kann dieses neben der Kugelform auch die Form eines Rotationsellipsoids, eines Prismas, eines Tropfens, eines Eis oder eines anderen Körpers aufweisen.

Das Steuerelement 3 liegt vollständig in der Steuerkammer 2 und kann entsprechend vollständig von dem Füllprodukt umströmt oder zumindest benetzt werden. Mit anderen Worten besteht keine mechanische Verbindung des Steuerelements 3 aus der Steuerkammer 2 hinaus, so dass es keinen Abschnitt des Steuerelements 3 gibt, welcher in einem *"trockenen"* Bereich der Vorrichtung 1 liegt.

Der Antrieb 4 wirkt auf das Steuerelement 3 mittels eines magnetischen Elementes 40, welches durch die jeweilige Wand der Steuerkammer 2 hindurch magnetisch mit dem Steuerelement 3 wechselwirkt. Bei einer Verschiebung des magnetischen Elements 40 des Antriebs 4 entlang der Wand der Steuerkammer 2 wird das Steuerelement 3 entsprechend mitgenommen und kann auf diese Weise innerhalb der Steuerkammer 2 verschoben und positioniert werden.

Mit anderen Worten ist die Verbindung zwischen dem Antrieb 4 und dem Steuerelement 3 berührungslos ausgeführt und die Wechselwirkung beziehungsweise die Übertragung der von dem Antrieb 4 auf das Steuerelement 3 ausgeübten Verstellkräfte findet ohne direkten mechanischen Kontakt statt.

Das magnetische Element 40 ist an dem Antrieb 4 über eine Spindelmutter 42 an einer Spindel 44, welche von einem Motor 46, welcher bevorzugt als Schrittmotor ausgebildet ist, geführt. Durch die Verwendung des Schrittmotors kann ein gezieltes und reproduzierbares Anfahren einer vorgegebenen Position des Antriebs 4 erreicht werden, so dass entsprechend auch eine vorgegebene Position des Steuerelements 3 in der Steuerkammer 2 reproduzierbar erreicht werden kann.

Entsprechend kann eine quasi stufenlose Verschiebung und Positionierung des magnetischen Elements 40 erreicht werden, so dass das mit dem magnetischen Element 40 magnetisch gekoppelte Steuerelement 3 gemeinsam mit diesem in der Steuerkammer 2 stufenlos verschoben und positioniert werden kann. Eine Betätigung des Motors 46 führt entsprechend zu einer Rotation der Spindel 44, welche dann zu einem Verschieben der Spindelmutter 42 und damit auch des magnetischen Elementes 40 führt, derart, dass das Steuerelement 3 innerhalb der Steuerkammer 2 analog zu dem magnetischen Element 40 verschoben und positioniert werden kann.

Durch die Aufnahme des Steuerelements 3 in der Steuerkammer 2 wird der effektiv für den Durchfluss bereitstehende Querschnitt q3, welcher zwischen der Ausdehnung des Steuerelements 3 und den entsprechend gegenüberliegenden Wandbereichen der Innenwand 20 der Steuerkammer 2 ausgebildet wird, entsprechend reduziert. Bei einer Verschiebung und Positionierung des Steuerelements 3 in der einen variierenden Querschnitt aufweisenden Steuerkammer 2 kann auf diese Weise auch der effektiv für den Durchfluss bereitstehende Querschnitt variiert werden.

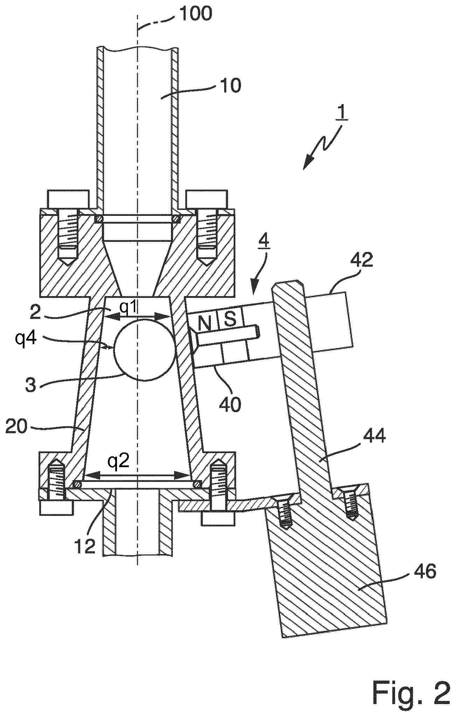

In diesem Zusammenhang zeigt Figur 1 eine erste Position des Steuerelements 3 innerhalb der Steuerkammer 2, in welcher ein erster effektiver Fließquerschnitt q3 bereitgestellt wird. Figur 2 zeigt die Vorrichtung 1 in einer zweiten Position, in welcher der Antrieb 4 das Steuerelement 3 in eine dem Zulauf 10 weiter zugewendete Position gebracht hat, in welcher der Querschnitt q1 der Steuerkammer 2 geringer ist, so dass hier entsprechend ein effektiver Fließquerschnitt q4 zwischen dem Steuerelement 3 und der entsprechend nächstliegenden Innenwände 20 der Steuerkammer 2 resultiert, welcher geringer ist, als der in Figur 1 gezeigte Fließquerschnitt q3. Es ist unmittelbar erkennbar, dass aufgrund der konischen Ausbildung der Steuerkammer 2 beziehungsweise der Innenwände 20 der Steuerkammer 2 durch ein stufenloses Verschieben des Steuerelements 3 von dem dem Zulauf 10 zugewendeten Ende der Steuerkammer 2 zu der dem Auslauf 12 zugewendeten Ende der Steuerkammer 2 entsprechend der effektive Fließquerschnitt stufenlos variiert werden kann.

Das Steuerelement 3 wird mittels des Antriebs 4 so zwischen einer Endposition mit geringem effektivem Fließquerschnitt q4, so wie in Figur 2 gezeigt, und einer Position mit großem effektivem Fließquerschnitt q3, so wie in Figur 1 gezeigt, bewegt und positioniert. Der Antrieb 4 ist dabei auf eine Bewegung zwischen der Endposition mit dem geringen effektiven Fließquerschnitt und der Endposition mit dem großen effektiven Fließquerschnitt begrenzt. Entsprechend kann das Steuerelement 3 nicht in einen vollständigen Verschluss der Vorrichtung 1 bewegt werden. Damit wird erreicht, dass das Steuerelement 3 stets vollständig von dem Füllprodukt umgeben ist und entsprechend die von dem Füllprodukt auf das Steuerelement 3 ausgeübten Druckverhältnisse stets von allen Seiten auf das Steuerelement 3 im Wesentlichen (bis auf einen etwaigen Unterschied in der anstehenden Flüssigkeitssäule) identisch sind.

Auf diese Weise kann erreicht werden, dass die von dem Antrieb 4 auf das Steuerelement 3 aufzubringenden Kräfte, insbesondere die von dem magnetischen Element 40 auf das Steuerelement 3 aufzubringenden Kräfte, unabhängig von den jeweils in der Steuerkammer 2 herrschenden Druckverhältnissen sind. Damit kann die Dimensionierung des magnetischen Elementes 40 des Antriebs 4 sowie die Materialauswahl des Steuerelements 3 auf diese auftretenden Kräfte beschränkt werden. Es ist daher nicht notwendig, den Antrieb 4 und insbesondere das magnetische Element 40 so stark auszubilden, dass das Steuerelement 3 auch bei einem Verschluss der Steuerkammer 2 wieder aus dieser Verschließposition herausgehoben werden können müsste. Würde das Steuerelement 3 beispielsweise den Auslauf 12 blockieren, so würde auf der der Steuerkammer 2 zugewendeten Seite ein hoher Druck und entsprechend hohe Kräfte in Richtung des Verschlusses wirken, welche in der auf dem dann den Auslauf 12 blockierenden Steuerelement 3 lastenden Flüssigkeitssäule des Füllprodukts ihren Ursprung finden. Auf der dem Auslauf 12 zugewendeten Seite läge bei einem Verschluss dann beispielsweise nur Atmosphärendruck vor. Entsprechend müsste hier eine hohe Kraft aufgewendet werden, um das Steuerelement 3 wieder aus der Verschlussposition herauszuheben. Dies wird durch die Begrenzung des Antriebs 4 auf die beiden Endpositionen, welche immer noch einen Mindestdurchfluss bereitstellen, vermieden, so dass die Dimensionierung des Steuerelements 3 und des magnetischen Elements 40 des Antriebs 4 bezüglich der Wechselwirkung moderat eingestellt werden können.

Entsprechend ergibt sich eine verschleiß- und wartungsarme Vorrichtung 1 zum Variieren des Durchflusses eines Füllprodukts, welche gleichzeitig auch ein gutes hygienisches Design ausbilden kann.

### Bezugszeichenliste

- 1: Vorrichtung
- 10: Zulauf
- 12: Auslauf
- 100: Achse
- 2: Steuerkammer
- 20: Innenwand
- 3: Steuerelement
- 4: Antrieb
- 40: magnetisches Element
- 42: Spindelmutter
- 44: Spindel
- 46: Motor

- q1: kleinerer Querschnitt
- q2: größerer Querschnitt
- q3: großer Fließquerschnitt
- q4: kleiner Fließquerschnitt

## Patentansprüche

1. Vorrichtung (1) zum Variieren des Durchflusses eines Füllprodukts in einer Abfüllanlage, umfassend eine mit einem Zulauf (10) und einem Auslauf (12) verbundene Steuerkammer (2) und ein in der Steuerkammer (2) aufgenommenes Steuerelement (3), welches durch Wechselwirkung mit einem außerhalb der Steuerkammer (2) angeordneten Antrieb (4) in der Steuerkammer (2) verschiebbar ist, wobei
der Querschnitt der Steuerkammer (2) zwischen einem dem Zulauf (10) zugewendeten Ende der Steuerkammer (2) und einem dem Auslauf (12) zugewendeten Ende der Steuerkammer (2) stufenlos variiert,
**dadurch gekennzeichnet, dass**
der Antrieb (4) zwischen einer ersten Endposition, in welcher das Steuerelement einen geringen effektiven Fließquerschnitt (q4) ausbildet und einer zweiten Endposition, in welcher das Steuerelement (3) einen großen effektiven Fließquerschnitt (q3) bereitstellt, begrenzt ist, so dass es für den Antrieb und das Steuerelement nicht möglich ist, die Vorrichtung und damit den Durchfluss vollständig zu verschließen.

2. Vorrichtung (1) gemäß Anspruch 1, **dadurch gekennzeichnet, dass** sich der Querschnitt der Steuerkammer (2) zwischen dem, dem Zulauf (10) zugewendeten Ende und dem Auslauf (12) zugewendeten Ende gemäß einer vorgegebenen mathematischen Funktion ändert.

3. Vorrichtung gemäß Anspruch 1 oder 2, **dadurch gekennzeichnet, dass** sich der Querschnitt der Steuerkammer (2) zwischen dem, dem Zulauf (10) zugewendeten Ende und dem Auslauf (12) zugewendeten Ende stetig ändert.

4. Vorrichtung (1) gemäß einem der vorstehenden Ansprüche, **dadurch gekennzeichnet, dass** die Steuerkammer (2) konusförmig ausgebildet ist.

5. Vorrichtung (1) gemäß einem der vorstehenden Ansprüche, **dadurch gekennzeichnet, dass** das Steuerelement (3) durch den Antrieb (4) zwischen einer Position mit geringem effektivem Fließquerschnitt (q4) und einer Position mit großem effektivem Fließquerschnitt (q3) verschiebbar ist.

6. Vorrichtung (1) gemäß einem der vorstehenden Ansprüche, **dadurch gekennzeichnet, dass** der Antrieb (4) einen Anschlag zur Begrenzung der Bewegung des Antriebs (4) zwischen der ersten Endposition und der zweiten Endposition aufweist, wobei der Anschlag bevorzugt mechanisch ausgeführt ist.

7. Vorrichtung (1) gemäß einem der vorstehenden Ansprüche, **dadurch gekennzeichnet, dass** das Steuerelement (3) sphärisch ausgebildet ist, bevorzugt kugelförmig ausgebildet ist.

8. Vorrichtung (1) gemäß einem der vorstehenden Ansprüche, **dadurch gekennzeichnet, dass** der Antrieb (4) und das Steuerelement (3) berührungslos miteinander wechselwirken.

9. Vorrichtung (1) gemäß einem der vorstehenden Ansprüche, **dadurch gekennzeichnet, dass** das Steuerelement (3) vollständig in der Steuerkammer (2) aufgenommen ist.

10. Vorrichtung (1) gemäß einem der vorstehenden Ansprüche, **dadurch gekennzeichnet, dass** das Steuerelement (3) mit dem Antrieb (4) magnetisch gekoppelt ist.

11. Vorrichtung (1) gemäß einem der vorstehenden Ansprüche, **dadurch gekennzeichnet, dass** das Steuerelement (3) in der Steuerkammer (2) mechanisch ungeführt aufgenommen ist.

12. Vorrichtung (1) gemäß einem der vorstehenden Ansprüche, **dadurch gekennzeichnet, dass** Mittel zum Verhindern eines vollständigen Verschlusses der Steuerkammer (2) durch das Steuerelement (3) in der Steuerkammer vorgesehen sind, bevorzugt im Bereich des Auslaufs (12) vorliegende Stege, Rippen, Abweiser, Ablenkbügel, Abstandshalter und/oder Anschläge.

## Claims

1. Device (1) for varying the flow of a filling product in a filling plant, comprising a control chamber (2) connected to an inlet (10) and an outlet (12) and a control element (3) received in the control chamber (2), which control element (3) can be displaced in the control chamber (2) by interaction with a drive (4) arranged outside of the control chamber (2), wherein
the cross-section of the control chamber (2) varies steplessly between an end of the control chamber (2) facing the inlet (10) and an end of control chamber (2) facing the outlet (12),
**characterized in that**
the drive (4) is limited between a first end position, in which the control element forms a small effective flow cross-section (q4), and a second end position, in which the control element (3) provides a large effective flow cross-section (q3), so it is not possible for the drive and the control element to completely close the device and therewith the flow.

2. Device (1) according to claim 1, **characterized in that** the cross-section of the control chamber (2) changes between the end facing the inlet (10) and the end facing the outlet (12) according to a predetermined mathematical function.

3. Device according to claim 1 or 2, **characterized in that** the cross-section of the control chamber (2) changes continuously between the end facing the inlet (10) and the end facing the outlet (12).

4. Device (1) according to any one of the preceding claims, **characterized in that** the control chamber (2) is cone-shaped.

5. Device (1) according to any one of the preceding claims, **characterized in that** the control element (3) can be displaced by the drive (4) between a position with a small effective flow cross-section (q4) and a position with a large effective flow cross-section (q3).

6. Device (1) according to any one of the preceding claims, **characterized in that** the drive (4) has a stop for limiting the movement of the drive (4) between the first end position and the second end position, wherein the stop is preferably mechanically configured.

7. Device (1) according to any one of the preceding claims, **characterized in that** the control element (3) is spherical, preferably ball-shaped.

8. Device (1) according to any one of the preceding claims, **characterized in that** the drive (4) and the control element (3) interact with each other without contact.

9. Device (1) according to any one of the preceding claims, **characterized in that** the control element (3) is received completely in the control chamber (2).

10. Device (1) according to any one of the preceding claims, **characterized in that** the control element (3) is magnetically coupled to the drive (4).

11. Device (1) according to any one of the preceding claims, **characterized in that** the control element (3) is received in the control chamber (2) in a mechanically unguided manner.

12. Device (1) according to any one of the preceding claims, **characterized in that** means for preventing complete closure of the control chamber (2) by the control element (3) are provided in the control chamber, preferably webs, ribs, deflectors, deflection brackets, spacers and/or stops present in the region of the outlet (12).

## Revendications

1. Dispositif (1) destiné à modifier le débit d'un produit de remplissage dans une installation de remplissage, comprenant une chambre de commande (2) qui est reliée à une entrée (10) et à une sortie (12), et un élément de commande (3) qui est logé dans la chambre de commande (2) et qui peut être déplacé dans la chambre de commande (2) en interagissant avec un dispositif d'entraînement (4) agencé à l'extérieur de la chambre de commande (2), dans lequel
la section transversale de la chambre de commande (2) varie de manière progressive entre une extrémité de la chambre de commande (2) proche de l'entrée (10) et une extrémité de la chambre de commande (2) proche de la sortie (12),
**caractérisé en ce que**
le dispositif d'entraînement (4) est limité entre une première position terminale dans laquelle l'élément de commande forme une petite section transversale d'écoulement effective (q4) et une deuxième position terminale dans laquelle l'élément de commande (3) fournit une grande section transversale d'écoulement effective (q3) de telle sorte qu'il n'est pas possible, pour le dispositif d'entraînement et l'élément de commande, de fermer complètement le dispositif et donc le débit.

2. Dispositif (1) selon la revendication 1, **caractérisé en ce que,** entre l'extrémité proche de l'entrée (10) et l'extrémité proche de la sortie (12), la section transversale de la chambre de commande (2) varie selon une fonction mathématique prédéterminée.

3. Dispositif selon la revendication 1 ou 2, **caractérisé en ce que,** entre l'extrémité proche de l'entrée (10) et l'extrémité proche de la sortie (12), la section transversale de la chambre de commande (2) varie de façon continue.

4. Dispositif (1) selon l'une quelconque des revendications précédentes, **caractérisé en ce que** la chambre de commande (2) est réalisée en forme de cône.

5. Dispositif (1) selon l'une quelconque des revendications précédentes, **caractérisé en ce que** l'élément de commande (3) peut être déplacé par le dispositif d'entraînement (4) entre une position avec une petite section transversale d'écoulement effective (q4) et une position avec une grande section transversale d'écoulement effective (q3).

6. Dispositif (1) selon l'une quelconque des revendications précédentes, **caractérisé en ce que** le dispositif d'entraînement (4) comporte une butée destinée à limiter le mouvement du dispositif d'entraînement (4) entre la première position terminale et la deuxième position terminale, la butée étant réalisée de préférence de façon mécanique.

7. Dispositif (1) selon l'une quelconque des revendications précédentes, **caractérisé en ce que** l'élément de commande (3) est sphéroïdal, de préférence en forme de sphère.

8. Dispositif (1) selon l'une quelconque des revendications précédentes, **caractérisé en ce que** le dispositif d'entraînement (4) et l'élément de commande (3) interagissent sans contact l'un avec l'autre.

9. Dispositif (1) selon l'une quelconque des revendications précédentes, **caractérisé en ce que** l'élément de commande (3) est entièrement logé dans la chambre de commande (2).

10. Dispositif (1) selon l'une quelconque des revendications précédentes, **caractérisé en ce que** l'élément de commande (3) est couplé magnétiquement au dispositif d'entraînement (4).

11. Dispositif (1) selon l'une quelconque des revendications précédentes, **caractérisé en ce que** l'élément de commande (3) est logé dans la chambre de commande (2) de manière non guidée mécaniquement.

12. Dispositif (1) selon l'une quelconque des revendications précédentes, **caractérisé en ce que** des moyens pour empêcher une fermeture complète de la chambre de commande (2) par l'élément de commande (3) sont prévus dans la chambre de commande, de préférence des traverses, nervures, déflecteurs, chicanes, écarteurs et/ou butées présents dans la zone de la sortie (12).
